# EUROPEAN PATENT SPECIFICATION

(11) **EP 2 150 479 B1**
(45) Date of publication and mention of the grant of the patent: **18.09.2013**
(21) Application number: 08737445.0
(22) Date of filing: 15.04.2008
(51) Int. Cl.: B65G 15/46, B29D 29/06

(54) **A METHOD AND AN APPARATUS FOR APPLYING AT LEAST A LONGITUDINAL GUIDE- SYNCHRONISATION ELEMENT ON A BELT FOR A CONVEYOR DEVICE AND THE BELT THUS OBTAINED**
VERFAHREN UND VORRICHTUNG ZUM ANBRINGEN MINDESTENS EINES LÄNGSFÜHRUNGS-SYNCHRONISIERELEMENTS AN EINEM BAND FÜR EINE FÖRDEREINRICHTUNG UND DAS SO ERHALTENE BAND
PROCEDE ET APPAREIL POUR APPLIQUER AU MOINS UN ELEMENT DE SYNCHRONISATION DE GUIDAGE LONGITUDINAL SUR UNE COURROIE POUR UN DISPOSITIF DE TRANSPORTEUR ET COURROIE AINSI OBTENUE

(30) Priority: 17.04.2007 IT BO20070275
(43) Date of publication of application: 10.02.2010
(73) Proprietor: P.R. DI RUBINO ATTILIO & C. S.A.S., 40011 Anzola Emilia (BO) (IT)
(72) Inventor: RUBINO, Attilio, 40011 Anzola Emilia (BO) (IT)
(74) Representative: Dall'Olio, Giancarlo
(86) International application number: PCT/IB2008/000914
(87) International publication number: WO 2008/125966

(56) References cited:
- EP-A- 1 710 469
- GB-A- 1 251 908
- US-A- 5 911 307

## Description

### TECHNICAL FIELD

The invention concerns the technical sector of belts having a raised longitudinal cogged guide, which are wound on pulleys provided with corresponding circular, hollow or cogged grooves, in which the guides engage for guiding purposes (self-centring) and for applications such as the synchronous/asynchronous conveying of articles or the transmission of motion.

### BACKGROUND ART

Belts for conveyor organs are known which comprise: a resistant inner layer providing the resistance to traction of the belt, which is usually made of a natural and/or synthetic fabric; and an outer layer, made from a range of materials (for example PVC, polyurethane, rubber, silicone, etc), to facilitate stable resting thereon of the articles being transported.

In order to prevent undesired transversal shifting, the belts can exhibit one or more raised longitudinal guides, applied on the resistant inner layer of the belt and suitably distanced from each other; these guides, which usually exhibit a trapezoidal cross-section, are associated to the inner layer of the belt by means of gluing, high-frequency welding or heat welding and engage complementarily with suitable hollow circular grooves provided in the drive and driven pulleys upon which the relative belt is wound.

However the overall rigidity exhibited by belts provided with centring guides of this type is such that it limits both the operating speed of the belts and the minimum admissible diameter for the drive and driven pulleys on which the belts are wound. For this reason, the corresponding conveyor organs to which the belts are fitted are of necessity extremely bulky, and are consequently suited to a limited range of applications.

Document US 5 911 307 discloses a conveyor belt which includes a flat belt, having a topside, a pulley side, a first outer edge and a second outer edge. The conveyor belt further includes a timing belt with timing teeth extending from the pulley side. The conveyor belt is used in a conveyor belt system including a drive roller having a gear portion shaped complementary to the timing teeth of the flat belt. The drive roller is arranged to engage with the pulley side of the flat belt. The conveyor belt system further includes a tail roller which also includes a gear portion shaped complementary to the timing teeth of the flat belt and arranged to engage with the pulley side of the flat belt.

### SUMMARY OF THE INVENTION

In light of the above, the aim of this invention is to provide a belt for a conveyor organ which exhibits at least a longitudinal guide-synchronisation element, to act as a guide and for applications for conveying articles or motion transmission, which belt with guide is of a generally new conception and is distinguished by improved flexibility compared with the prior art in this technical sector.

In addition, another aim of the invention is to provide a belt for conveyor organ, for use in applications for the synchronous/asynchronous conveying of articles or for motion transmission.

Another aim of the invention is to provide a belt for conveyor organ which is reliable, resistant, easy to fit on the drive and driven pulleys, and the implementation costs of which are relatively inexpensive compared with the advantages provided.

A further aim of the invention is to provide a belt for a conveyor organ the costs of which are relatively contained compared with the advantages provided.

A further aim of the invention is to provide a method for applying longitudinal guide-synchronisation elements to belts for conveyor organs, for guiding purposes or for applications regarding conveying of articles or motion transmission, which method is of new conception and enables a belt for conveyor organ to be obtained having improved flexibility compared with the prior art in this technical sector.

A further aim of the invention is to provide a method for applying longitudinal guide-synchronisation elements to belts for conveyor organs, for applications for the synchronous/asynchronous conveying of articles or for transmitting motion.

A still further aim of the invention is to provide a method, the implementation costs of which are relatively contained compared with the advantages which are provided.

A still further aim of the invention is to provide an apparatus for applying longitudinal guide-synchronisation elements to belts for conveyor organs for the purpose of guiding and for applications for the conveying of articles or for motion transmission, which apparatus is of a new conception and enables a conveyor organ belt to be obtained having improved flexibility compared with those of known type in this sector.

A still further aim of the invention consists in providing an apparatus for applying longitudinal guide-synchronisation elements to belts for conveyor organs, for synchronous/asynchronous applications for conveying articles or for motion transmission.

A still further aim of the invention is to provide an apparatus for applying longitudinal guide-synchronisation elements to belts for conveyor organs which is reliable, functional, safe and provides a belt with a reliable and sturdy guide of proven quality, which is easy to apply to the relative drive and driven pulleys.

A still further aim of the invention is to provide an apparatus the costs of which are relatively contained compared with the advantages which are provided.

The above mentioned aims are achieved by means of an apparatus, a method and a belt which are the objects of claims 1, 5 and 10 respectively.

### BRIEF DESCRIPTION OF THE DRAWINGS

The characteristics of the invention which have not emerged from the above will be more fully described herein below, in accordance with the claims and with the aid of the appended figures of the drawings, in which:
figure 1 is a perspective view of a belt with cogged guide which is the object of the invention, and which is wound on two pulleys, a drive pulley and a driven pulley, which afford corresponding cogged grooves for coupling;
figure 1A is an enlarged partial view of the cross-section of a pulley of figure 1, represented at the position of the relative cogged circular groove;
figure 1B is a view in the same scale as figure 1A of the cross-section of a pulley which differs from that of figure 1 in that the relative circular groove is hollow; in figure 1B the cross-section is taken at the position of the relative hollow circular groove;
figure 2 is an side view, in large scale in comparison to figure 1, which schematically shows the removal of material from a cogged belt made of thermoplastic material;
figure 3 is a partial schematic side view of a station where a base belt and a cogged belt are assembied together in order to provide a belt with cogged guide according to the invention;
figure 4 is an enlarged view of the detail A of figure 3;
figure 5 is a view of the cross-section V-V of figure 2;
figure 6 is a section view similar to that of figure 5 where hypothetically use is made of a cogged belt made of thermoplastic material, within which a longitudinal reinforcement core is embedded;
figure 7 is similar to figure 1, showing a perspective view of a belt with cogged guide in a variant embodiment which is wound on two pulleys.

### BEST MODE FOR CARRYING OUT THE INVENTION

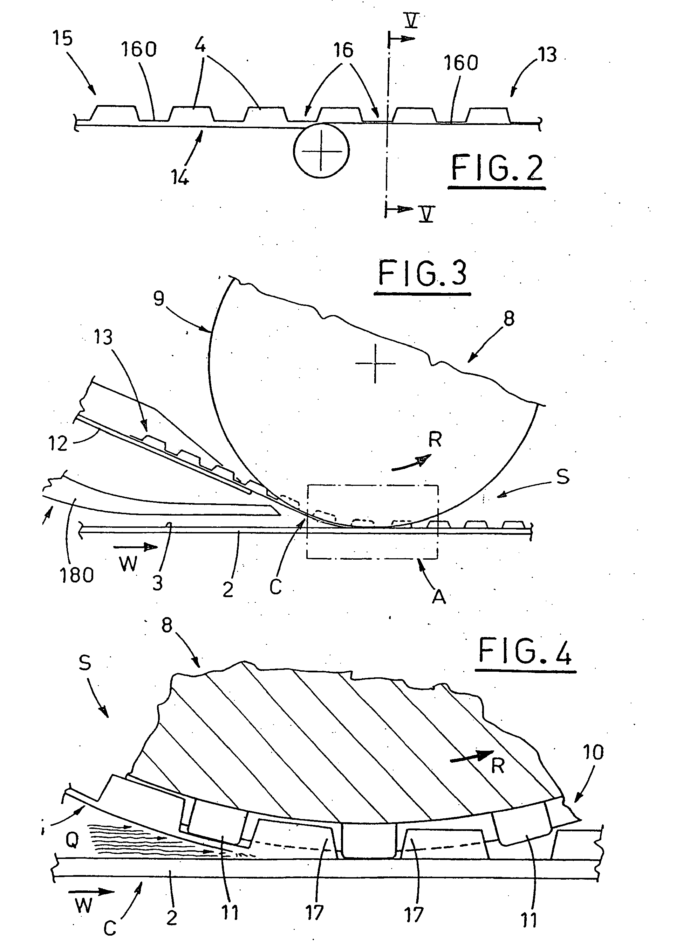

In the appended figures of the drawings, the apparatus which is the object of this invention comprises: means, which are not illustrated as of known type, for drawing a belt 2 towards an assembly station S in a horizontal direction of advancement W, which belt is shaped and structured such as to be subsequently mounted on a conveyor organ; a drive pulley 8, which is arranged in the assembly station S immediately above the transiting belt 2, is activated in a direction of rotation R in agreement with the direction of advancement W, and exhibits a circular groove 10 afforded in a peripheral edge 9 thereof, within which a plurality of cogs 11 is arranged, which cogs 11 are regularly distanced from each other; a slide 12, which supports a cogged belt 13 for example made entirely of thermoplastic material, the belt 13 being supplied by a station (not illustrated) and directed towards the assembly station S after engaging with the drive pulley 8; a device, not illustrated since of known type, which is arranged upstream of the supply station of the cogged belt 13, for abrasively removing relative material (sanding) of the cogged belt 13 from a lower fixing side 14 of the cogged belt 13 which lower fixing side 14 is counter-positioned to the relative upper cogged profile 15, in order to reduce the overall thickness of the cogged belt 13 and thus in particular the thickness of the connection elements 16 of the cogs 4 of the belt 13 to a predetermined amount (figure 2), for reasons which will better emerge herein below; and a source 18 which emits a flow of heat Q (for example hot air) in a region C of the assembly station S.

The belt 2 for conveyor organ is of a type known to a person skilled in the art and comprises, for example: a resistant layer 3 which resists traction and is made of a natural and/or synthetic fabric, and a counter-positioned layer 20 made of a mixtures of a variety of materials (PVC, polyurethane, rubber, silicone, and the like) in order to assist the articles to be conveyed (not shown) to rest stably thereon.

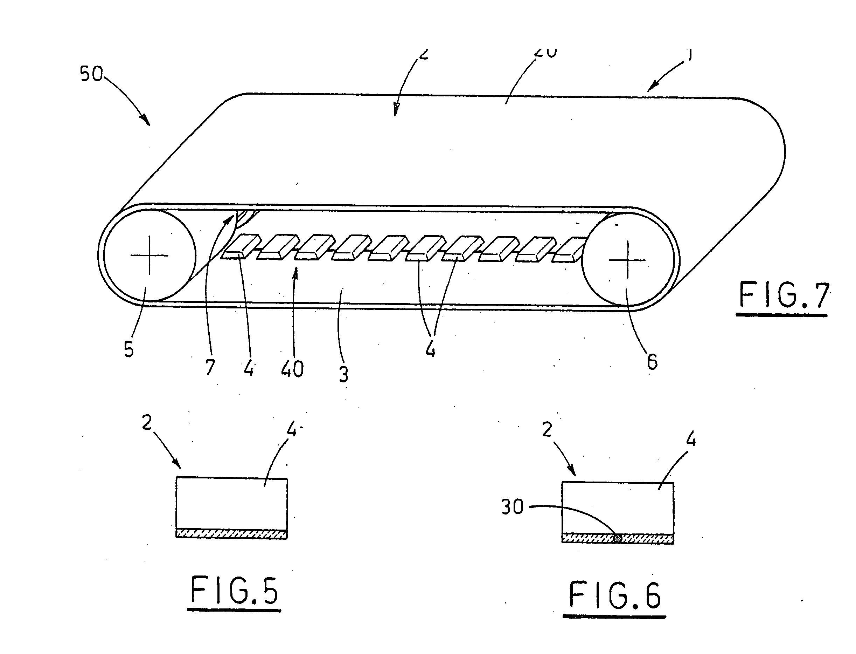

The cogged belt 13 is also of a known type and for example is made entirely of thermoplastic material (figure 5); it is therefore subjected to the above-mentioned material removal operation (sanding) on the relative fixing side 14, in order to adjust the thickness of the connection elements 16, for reasons that will emerge below.

In a variant which will be discussed herein below, the cogged belt 13 can exhibit at least a reinforcement core 30 (in accordance with the example shown in figures 6, 7, only one reinforcement core 30 is provided) which extends longitudinally, is embedded in the thermoplastic material and is arranged at the longitudinal half-way plane of the cogged belt 13, near or possibly level with the upper surface 160 of the connection elements 16. The transversal cross-section of the reinforcement core 30 is extremely limited (for example filiform) compared with that of the cogged belt 13 and exhibits predetermined characteristics of flexibility and resistance; it can be of any shape (for example cylindrical) and can be made from the materials which from time to time are considered most suitable because of their resistance and flexibility characteristics, such as carbon, steel, silicon, Kevlar®, and the like.

The pulley 8 has a horizontally-oriented axis, which is perpendicular to the direction of advancement W of the belt 2, the pulley 8 being for example centred relative to the belt 2 transiting in the assembly station S; it is driven by actuator organs (not shown) continuously and in phase synchrony with the activation of the source 18 and the activation of the belt 2, at a same tangential speed as the belt 2. In particular, relative to the transiting belt 2, the drive pulley 8 is arranged in such a way that the cogged belt 13 with which it engages is applied, with a predetermined pressure, to the underlying belt 2 transiting in the assembly station S; the fixing side 14 of the cogged belt 13 therefore enters into contact with the resistant layer 3 of the belt 2, adhering optimally and without any slippage, since as mentioned above, the belt 2 and the cogged belt 13 are drawn at the same advancement speed.

Through a nozzle 180, the source 18 emits the flow of hot air Q in the region C in which the cogged belt 13 and belt 2 are close to reciprocal contact (figure 4), thus determining the localised fusion of corresponding portions of the cogged belt 13 on the relative fixing side 14; in the example shown, the nozzle is arranged above, and aligned with, the transiting belt 2, in such a way that the issuing flow Q of hot air strikes the fixing side 14 and the resistant layer 3 frontally in the region C where the fixing side 14 and the resistant layer 3 are close to reciprocal contact.

The functioning of the apparatus of this invention is as described in the corresponding method for applying at least a longitudinal guide-element to the belt 2, which method is also an object of the invention, and comprises:
- an initial stage in which material of the cogged belt 13 is uniformly removed on the fixing side 14, in order to adjust the thickness of the connection elements 16 to a predetermined amount;
and the following subsequent operating stages which all take place contemporaneously:
- activating the belt 2 towards the assembly station S along a first advancement trajectory; in the illustrated example this first trajectory extends along the straight and horizontal direction of advancement W;
- supplying the cogged belt 13 in the assembly station S along a second advancement trajectory, at a speed equal to that of the belt 2 and in the same advancement direction as the belt 2; in the illustrated example the second trajectory is identified specifically by interaction of the cogged belt 13 with the slide 12, the drive pulley 8 and the belt 2 (figure 3);
- joining the cogged belt 13 and the belt 2 together in the assembly station S, thus defining a reciprocal contact; in the example shown, this reciprocal contact is made possible by the reciprocal arrangement of the drive pulley 8, meshing with the cogged belt 13, with the underlying belt 2 in transit; and
- emitting in the assembly station S a flow of heat Q which is directed to the region C where the fixing side 14 of the cogged belt 13 is on the point of entering into contact with the belt 2, thus determining the localised fusion of the cogged belt 13 on the relative fixing side 14.

The localised fusion of the cogged belt 13 on the fixing side 14 and the joining thereof with the belt 2, which takes place through the contact between the fixing side 14 and the resistant layer 3, contemporaneously determines both the fixing by fusion of the cogged belt 13 to the belt 2 and the disaggregation and complete separation of the thermoplastic material of the connection elements 16 which connects the cogs 4 to each other. The cogs therefore remain constrained to the belt 2 and are separate from each other, giving rise all together to a longitudinal guide-synchronisation element 40.

The previously-performed sanding operation on the cogged belt 13 reduces the thickness of the connection elements 16 to the point where at the moment of fusion, the connection elements 16 disaggregate completely; note that the sanding operation can be avoided by using cogged belts 13 the connection elements 16 of which already have a sufficiently limited thickness, that is to say, a thickness such that the connection elements 16 disaggregate entirely during the fusion operation.

In general, the purpose of the sanding operation can be to suitably adjust the thickness of the connection elements 16 to bring about the disaggregation and separation of the thermoplastic material of only a certain number of the connection elements 16: therefore, if the thickness of the connection elements 16 is very limited, the complete disaggregation thereof is obtained (since they are constituted only by thermoplastic material), while if the thickness is greater, experimentation has shown that only a certain number of connection elements 16 is destined to disaggregate; therefore, by adjusting the thickness of the connection elements 16 between a minimum value and a maximum value it is possible to vary the number of connection elements 16 destined to disaggregate respectively between a maximum number (the totality of the connection elements 16 disaggregates) and a zero value (no connection elements 16 disaggregate). This invention in particular aims to achieve disaggregation of a non-zero number of connection elements 16, and possibly the maximum number.

In the case of disaggregation of only a certain given number of connection elements 16 during the fusion, a plurality of distinct groups is defined, each formed by one or more cogs 4 connected by connection elements 16, the thermoplastic material of which has not disaggregated.

If a cogged belt 13 made entirely of thermoplastic material is used and the thickness of the connection elements 16 is adjusted to the predetermined minimum value, in order to obtain the disaggregation of the totality of the connection elements 16 by the method and the apparatus of the invention, a belt 2 is produced, on the resistant layer 3 of which a succession of cogs 4 is applied by fusion, which cogs 4 are equi-distanced and constitute a longitudinal guide-synchronisation element 40, as will be demonstrated better below. These cogs 4 are arranged in a longitudinal direction and are centred on the half-way line of the belt 2, since the belt 2, as mentioned above, reaches the assembly station S in a centred position relative to the drive pulley 8.

By way of example, the belt with cogged guide 50 thus obtained can be subjected to operating stages, which are of a known type and are therefore not shown in the figures of the drawings, and which comprise: shearing the belt with cogged guide 50 into lengths of predetermined size; fixing the ends of each length to obtain a ring-wound belt with cogged guide 50, which exhibits the resistant layer 3 to which the cogs 4 are applied, arranged on the inner side of the belt with cogged guide 50.

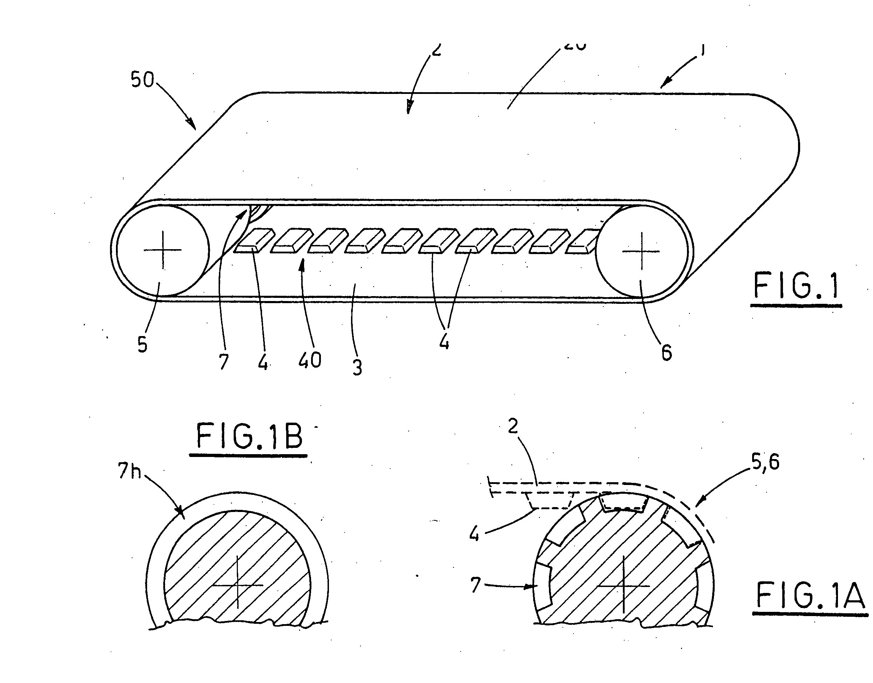

Figure 1 shows a belt with cogged guide 50 which is ring-wound around a drive pulley 5 and a driven pulley 6: a succession of cogs 4 are applied by fusion on the resistant inner layer 3 of the belt 2, which cogs 4 are destined to engage in corresponding circular grooves 7 affording cogs (figure 1A), for guide purposes, that is, to self-centre the belt with cogged guide 50 relative to the pulleys 5, 6 on which it is wound, and for conveying articles or transmitting motion in applications of a synchronous type (engagement of the cogs 4 with the cogs fashioned in the grooves 7 of the pulleys 5, 6), for which applications a stepwise activation of the belt with cogged guide 50 is possible.

Alternatively the belt with cogged guide 50 can be wound around pulleys exhibiting hollow circular grooves 7h, which are not cogged (figure 1 B): in this case the cogs 4 only contribute to keeping the belt with cogged guide 50 centred relative to the pulleys on which it is wound, and the applications in which the thus defined corresponding conveyor organ can be utilised are of an asynchronous type.

The belt with cogged guide 50 obtained with the method and apparatus which are the object of this invention thus comprises a belt 2 on which a guide-synchronisation element 40 is applied, for utilisation in synchronous or asynchronous applications; in the example in figure 1, the guide-synchronisation element 40 is arranged in a centred position relative to the half-way line of the belt 2 and is constituted by a succession of cogs 4 separated from one another.

As mentioned above, the guide-synchronisation element 40 can also be constituted by a plurality of groups which are distinct from each other and are constrained to the belt 2, each of which comprises one, two or even more cogs 4 which are interconnected by connection elements 16, not having separated during the fusion process. Further, it is clearly possible to stagger the guide-synchronisation element 40 by the desired amount with respect to the half-way line of the belt 2: to do this, before starting up the apparatus it is sufficient to stagger the belt 2 by a corresponding amount relative to the drive pulley 8, so that the cogged belt 13 is applied at the desired position on the belt 2.

The method and apparatus which is the object of this invention also make it possible to obtain a belt with cogged guide 50 comprising several guide-synchronisation elements 40 which are for example equidistant on the belt 2 (solution not shown in the figures).

Two different procedures can be used to obtain a belt with cogged guide 50 comprising two or more guide-synchronisation elements 40, both procedures being included in the ambit of protection of the invention: in a first solution, a length of belt 2 can be subjected to the above-described stages of the method of the invention, for a number of times (or operating cycles) equal to the number of guide-synchronisation elements 40 to be applied, taking care between one operating cycle and the next to stagger the belt 2 suitably relative to the drive pulley 8. Alternatively, if the above-described apparatus shown in the figures is considered as being formed by a single operating unit, a number of operating units of the apparatus of the invention can be provided that is equal to the number of guide-synchronisation elements 40 required to be applied to the belt; in this case, a corresponding number of drive pulleys 8, slides 12 and supply stations of cogged belts 13 must be provided, all suitably reciprocally distanced, based on how the guide-synchronisation elements 40 are to be arranged. In addition, the operating units which are part of the apparatus can be transversally adjusted in order to vary their reciprocal arrangement with ease on the basis of the production specifications, that is to say according to the number and the arrangement of the guide-synchronisation elements 40 which are to be applied to the belt 2.

Advantageously, although the belt with cogged guide 50 which is thus obtained performs the same self-centring function as the belts for conveyor organs of a known type which are generally provided with a continuous, uniform, raised longitudinal guide, the belt with cogged guide 50 is significantly more flexible; consequently the belt with cogged guide 50 of the invention can also be used in applications in which the diameter of the drive and driven pulleys is much smaller than the minimum permitted with self-centring belts of known type, with all the positive implications this entails, such as an overall less bulky conveyor organ and a saving in terms of materials used (pulleys and belt). In particular, this type of belt with cogged guide 50 can be advantageously utilised also in so called "pen wound belt applications", in which the drive and driven pulleys have a diameter of less than 20 mm.

Since reduction of the diameters of the pulleys on which the belt 2 is destined to be wound 2 increases the flexibility of the belt 2. a whole series of related technical-functional advantages obviously ensues, such as reducing the weight, the bulk and therefore also the cost of the corresponding conveyor organ thus obtained.

These considerations regarding the greater flexibility of the belt with cogged guide 50 according to the invention apply both to guide-synchronisation elements 40 comprising a number of connection elements 16 which have not disaggregated during the fusion process and, even more, to guide-synchronisation elements 40 for which this disaggregation and separation process has taken place completely (figure 1).

A further advantage of the invention consists in having defined an apparatus for applying longitudinal guide-synchronisation elements to belts for conveyors for use as guides and for applications such as the synchronous/asynchronous conveying of articles or motion transmission.

A further advantage of the invention consists in having defined an apparatus which is not only reliable, functional and safe, but also versatile, since it can easily be adapted to production specifications so as to provide belts with cogged guides 50 comprising guide-synchronisation elements 40 in variable number and arranged in any way, relative to one another on the belt 2.

A further advantage of the invention consists in having defined an apparatus the costs of which are relatively contained compared with the advantages which are provided.

A still further advantage of the invention consists in having defined a method for applying longitudinal guide-synchronisation elements to belts for conveyors, which is constituted by an essential number of operating stages, which makes it possible to obtain a more flexible belt for conveyor organ compared with those of known type in this technical sector, the costs for the implementation of which are relatively contained compared with the advantages obtained.

A further advantage of this invention consists in having defined a method for applying longitudinal guide-synchronisation elements to belts for conveyor which can be utilised for guide purposes and for applications for the synchronous/asynchronous conveying of articles or for motion transmission.

A further advantage of the invention consists in having defined a belt with cogged guide 50 for conveyor organ of a new conception, which is more flexible compared with similar belts of a known type; the belt with cogged guide 50 is reliable, resistant, easy to apply to the relative drive and driven pulleys, and the overall costs of implementation of which are relatively contained compared with the advantages which are obtained.

A still further advantage of the invention consists in having defined a belt with cogged guide 50 for conveyor organ suited to being used for guide purposes and for applications for the synchronous/asynchronous conveying of articles or for motion transmission.

In the case where a cogged belt 13 comprising at least a longitudinal reinforcing core 30 (figure 6) is used, the cogs always remain interconnected through the reinforcement core 30, since it is resistant to the flow of heat Q emitted by the source 18.

This means that each group, besides being constrained by fusion to the belt 2, is always interconnected to an adjacent group by the longitudinal reinforcement core 30; similarly each cog 4 is interconnected to the adjacent cog 4 of the group to which it belongs by a connection (provided by a corresponding connection element 16) consisting of both the reinforcement core 30 and the thermoplastic material which has not completely separated during the fusion stage.

In agreement with the contents of the claims, adjacent groups are considered as being distinct from each other, because they are not interconnected by thermoplastic material; these groups are however interconnected by the longitudinal reinforcement core 30.

The belt with cogged guide 50 comprising the longitudinal reinforcement core 30 is represented by way of example in figure 7, in a case where the process of fusion has led to disaggregation of the thermoplastic material of all the connecting elements 16; the longitudinal reinforcement core 30 reciprocally interconnects all the cogs 4, and thanks to its characteristics of flexibility, the belt with cogged guide 50 which is obtained in this way is no more rigid than the belt shown in figure 1 comprising a longitudinal guide-synchronisation element 40 with no reinforcement core 30.

Advantageously, the belt with cogged guide 50 comprising the longitudinal reinforcement core 30 makes the belt with cogged guide 50 unstretchable and this is particularly advantageous when fitting the belt with cogged guide 50 on the pulleys. In fact belts can be subjected to variable traction stresses during the fitting operation, which can give rise to a percentage lengthening depending on the material which they are made of; if the belt with cogged guide 50 is destined to engage with corresponding cogged grooves 7 afforded in the drive pulleys 5 and driven pulleys 6 for synchronous step-type applications, excessive traction of the belt with cogged guide 50 during fitting could determine a percentage lengthening that might compromise correct enmeshing between the guide-synchronisation element and the cogs afforded in the pulleys 5, 6. Use, however, of a belt with cogged guide 50 having a longitudinal reinforcement core (figures 6, 7) obviates this drawback, since the unstretchability of the reinforcement core 30 prevents the belt with cogged guide 50 in its entirety from stretching in an undesirable way.

In this variant, the belt with cogged guide 50 maintains all the above-described advantageous technical-functional characteristics for belts with cogged guide 50 without longitudinal reinforcement core 30. Therefore this variant is to be considered as being included within the ambit of protection of this invention.

## Claims

1. An apparatus for applying at least a longitudinal guide-synchronisation element on a belt for conveyor organ, the belt (2) in its entirety being windable on pulleys (5, 6) affording grooves (7, 7h) with which the at least a guide-synchronisation element (40) engages, **characterised in that** it comprises: means for drawing the belt (2) along an advancement direction (W) towards an assembly station (S); a source (18) for emitting a flow of heat (Q) in a region (C) of the assembly station (S), which is activated in a phase relation with activation of the belt (2); a pulley (8), arranged in the assembly station (S), an axis of which pulley (8) is perpendicular to the advancement direction (W) of the belt (2), and which pulley (8) faces with a peripheral edge (9) thereof the belt (2) transiting in the assembly station (S), the pulley (8) being driven by actuator organs in a phase relation with activation of the source (18) emitting a flow of heat (Q) and with the activation of the belt (2), in a rotation direction (R) coinciding with a direction of the belt (2), along the advancement direction (W) and at a tangential speed which is equal to the speed of the belt (2), the pulley (8) being further provided with a circular cogging (11) which is destined to mesh with a cogged belt (13) supplied by a relative supply station, thus providing a drawing action, which cogged belt (13) is composed at least in part of a thermoplastic material and comprises a plurality of consecutive cogs (4) interconnected by connecting elements (16) of a predetermined thickness, giving rise to a fixing side (14) counterposed to a cogged profile (15), the cogged belt (13) being drawn by the pulley (8) and intercepting with the fixing side (14) the belt (2) near the region (C) subjected to the flow of heat (Q), consequently fixing the cogged belt (13) to the belt (2) by means of localised fusion of corresponding portions of the cogged belt (13), and further disaggregating and separating the thermoplastic material of a number of connection elements (16) consequently giving rise to a plurality of groups, each group comprising one cog (4), or two or more cogs (4) which are interconnected by respective connection elements (16), the thermoplastic material of which has not disaggregated, adjacent groups being considered distinct from each other since not interconnected by thermoplastic material.

2. The apparatus of claim 1, **characterised in that** it further comprises a device functionally arranged upstream of the assembly station (S) for removing material from the cogged belt (13) on the fixing side (14) thereof, in order to adjust a thickness of the connection elements (16) of the cogged belt (13) to vary the number of the connection elements (16), the thermoplastic material of which is destined to disaggregate and separate.

3. The apparatus of claim 1, wherein the cogged belt (13) is made entirely of thermoplastic material, **characterised in that** each group is directly disjointed from an adjacent group, being constrained by fixing only to the belt 2.

4. The apparatus of claim 1, wherein the cogged belt (13) is made of a thermoplastic material in which at least a reinforcement core (30) is embedded, **characterised in that** each group is constrained by fixing to the belt (2) and is also joined to the adjacent group by means of the at least a reinforcement core (30).

5. A method for applying at least a longitudinal guide-synchronisation element on a belt for conveyor organ, the belt (2) in its entirety being windable on pulleys (5, 6) affording grooves (7, 7h) with which the at least a guide-synchronisation element (40) engages, the method utilising at least a cogged belt (13) which is composed at least in part of thermoplastic material and comprises a plurality of consecutive cogs (4) connected by connection elements (16) of a predetermined thickness, giving rise to a fixing side (14) counterposed to a cogged profile (15), **characterised in that** it comprises fixing the cogged belt (13) on the belt (2) on the side of the relative fixing side (14) by means of localised fusion of corresponding portions of the cogged belt (13), further disaggregating and separating the thermoplastic material of a number of connection elements (16) and consequently defining a plurality of groups, each group comprising one cog (4), or two or more cogs (4) which are interconnected by respective connection elements (16), the thermoplastic material of which has not disaggregated, adjacent groups being considered distinct from each other since not interconnected by thermoplastic material.

6. The method of claim 5, **characterised in that** the above-mentioned stage of fixing the cogged belt (13) to the belt (2) by means of localised fusion comprises, in particular, following operations which take place contemporaneously:
- activating the belt (2) to move towards an assembly station (S) along a first advancement trajectory (W);
- supplying the cogged belt (13) in the assembly station (S) along a second advancement trajectory, at a speed which is equal to a speed of the belt (2) and in a same advancement direction as the belt (2);
- joining the cogged belt (13) and the belt (2) together in the assembly station (S) so that there is mutual contact; and
- emitting a flow of heat (Q) in the assembly station (S) directed toward the region (C) in which the fixing side (14) of the cogged belt (13) enters into contact, and/or is close to entering into contact, with the belt (2), thus determining locallsed fusion of the cogged belt (13) at the fixing side (14).

7. The method of claim 6, **characterised in that** the first advancement trajectory develops in a straight and horizontal direction (W).

8. The method of claim 6 or 7, **characterised in that** the second advancement trajectory (R) comprises an arc of circumference in the region (C) where the fixing side (14) of the cogged belt (13) enters into contact, and/or is close to entering into contact, with the belt (2).

9. The method of claim 5, **characterised in that** it further comprises an initial stage of removing material from the cogged belt (13) on the fixing side (14) in order to adjust the thickness of the connection elements (16) of the cogged belt (13).

10. A belt for a conveyor organ, provided with at least a longitudinal guide-synchronisation element, of a type which is windable on pulleys (5, 6) affording grooves (7, 7h) with which the at least a longitudinal guide-synchronisation element (40) engages, wherein the guide-synchronisation element (40) at least partially consists of thermoplastic material, **characterised in that** the guide-synchronisation element (40) comprises: a plurality of groups which are arranged one after another in a longitudinal direction, and which are fixed to the belt (2) by fusion of corresponding portions of thermoplastic material, each of the groups comprising one cog (4) or two or more cogs (4) which are interconnected by respective connection elements (16), the thermoplastic material of which has not disaggregated and separated during the fusion operation, adjacent groups being considered distinct from each other since not interconnected by thermoplastic material.

11. The belt of claim 10, **characterised in that** the guide-synchronisation element (40) is composed entirely of thermoplastic material, so that each group is directly disjointed from an adjacent group and is fixed by fusion to the belt (2).

12. The belt of claim 10, **characterised in that** the guide-synchronisation element (40) is composed of thermoplastic material in which at least a reinforcement core (30) is embedded, in such a way that each group is joined to an adjacent group by the at least a reinforcement core (30) and fixed by fusion to the belt (2).

13. The belt according to any of the claims from 10 to 12, **characterised in that** the cogs (4) of the guide-synchronisation element (40) are shaped such as to engage with a corresponding cogged circular groove (7h) afforded in a pulley of the pulleys (5, 6) for guide and synchronisation applications.

## Patentansprüche

1. Vorrichtung zum Anbringen mindestens eines Längsführungs-Synchronisierelements an einem Band für eine Fördereinrichtung, wobei das Band (2) vollständig um Antriebsrollen (5, 6) gewunden werden kann, welche Nuten (7, 7h) aufweisen, mit denen zumindest ein Führungs-Synchronisierelement (40) in Eingriff tritt, **dadurch gekennzeichnet, dass** sie Folgendes beinhaltet: Mittel zum Mitnehmen des Bandes (2) entlang einer Vorschubrichtung (W) in Richtung einer Zusammenfügstation (S); eine Quelle (18) zur Ausgabe einer Wärmeströmung (Q) in einem Bereich (C) der Zusammenfügstation (S), die in Phasenbeziehung zu der Aktivierung des Bandes (2) aktiviert wird; eine Antriebsrolle (8), die in der Zusammenfügstation (S) angeordnet ist, wobei die Achse dieser Antriebsrolle (8) perpendikular zu der Vorschubrichtung (W) des Bandes (2) ist, und wobei die Antriebsrolle (8) mit einem an ihrem Umfang verlaufenden Rand (9) dem Band (2) zugewandt ist, das die Zusammenfügstation (S) durchläuft, wobei die Antriebsrolle (8) durch Stellantriebsorgane in Phasenbeziehung zu der Aktivierung der Quelle (18) zur Ausgabe einer Wärmeströmung (Q) und zu der Aktivierung des Bandes (2), in einer Drehrichtung (R) aktiviert wird, die einer Richtung des Bandes (2) entlang der Vorschubrichtung (W) entspricht und mit einer Tangentialgeschwindigkeit, die gleich der Geschwindigkeit des Bandes (2) ist, wobei die Antriebsrolle (8) ferner eine kreisförmige Zahnung (11) aufweist, die dazu bestimmt ist, mit einem Zahnriemen (13) in Eingriff zu treten, der durch eine entsprechende Zufuhrstation zugeführt wird, um somit eine Mitnehmerwirkung auszuüben, wobei der Zahnriemen (13) zumindest teilweise aus einem thermoplastischen Material besteht und mehrere aufeinanderfolgende Zähne (4) beinhaltet, die durch Verbindungselemente (16) vorgegebener Dicke miteinander verbunden sind, um somit eine Befestigungsseite (14) zu bilden, die entgegengesetzt zu einem gezahnten Profil (15) liegt, wobei der Zahnriemen (13) von der Antriebsrolle (8) mitgenommen wird und mit seiner Befestigungsseite (14) das Band (2) in der Nähe des der Wärmeströmung (Q) ausgesetzten Bereichs (C) abfängt, so dass demzufolge der Zahnriemen (13) durch das lokalisierte Schmelzen entsprechender Abschnitte des Zahnriemens (13) an dem Band (2) befestigt wird, wobei ferner das Auflösen und Trennen des thermoplastischen Materials einer Reihe von Verbindungselementen (16) erfolgt, so dass demzufolge mehrere Gruppen gebildet werden, wobei jede Gruppe einen Zahn (4), oder zwei oder mehr Zähne (4) beinhaltet, die durch entsprechende Verbindungselemente (16) miteinander verbunden sind, deren thermoplastisches Material nicht aufgelöst wurde, wobei aneinander angrenzende Gruppen als getrennt voneinander betrachtet werden, da sie nicht durch thermoplastisches Material miteinander verbunden sind.

2. Vorrichtung nach Anspruch 1, **dadurch gekennzeichnet, dass** sie ferner eine Vorrichtung beinhaltet, die stromaufwärts vor der Zusammenfügstation (S) wirkverbunden angeordnet und dazu vorgesehen ist, Material von dem Zahnriemen (13) auf dessen Befestigungsseite (14) abzunehmen, um eine Dicke der Verbindungselemente (16) des Zahnriemens (13) zu regulieren, so dass die Anzahl der Verbindungselemente (16) variiert wird, deren thermoplastisches Material dazu bestimmt ist, sich aufzulösen und zu trennen.

3. Vorrichtung nach Anspruch 1, worin der Zahnriemen (13) vollständig aus thermoplastischem Material besteht, **dadurch gekennzeichnet, dass** jede Gruppe direkt von einer benachbarten Gruppe getrennt wird und nur durch Befestigung an dem Band (2) festgehalten wird.

4. Vorrichtung nach Anspruch 1, worin der Zahnriemen (13) aus einem thermoplastischen Material hergestellt ist, in das zumindest eine Verstärkungseinlage (30) eingebettet ist, **dadurch gekennzeichnet, dass** jede Gruppe durch Befestigung an dem Band (2) festgehalten wird und auch mit der benachbarten Gruppe mittels zumindest einer Verstärkungseinlage (30) verbunden ist.

5. Verfahren zum Anbringen mindestens eines Längsführungs-Synchronisierelementes an einem Band für eine Fördereinrichtung, wobei das Band (2) vollständig um Antriebsrollen (5, 6) gewunden werden kann, welche Nuten (7, 7h) aufweisen, mit denen zumindest ein Führungs-Synchronisierelement (40) in Eingriff tritt, wobei das Verfahren zumindest einen Zahnriemen (13) verwendet, der zumindest teilweise aus thermoplastischem Material besteht und mehrere aufeinanderfolgende Zähne (4) beinhaltet, die durch Verbindungselemente (16) vorgegebener Dicke miteinander verbunden sind, um somit eine Befestigungsseite (14) zu bilden, die entgegengesetzt zu einem gezahnten Profil (15) liegt, **dadurch gekennzeichnet, dass** es folgende Schritte beinhaltet: Befestigen des Zahnriemens (13) auf dem Band (2) auf der Seite der entsprechenden Befestigungsseite (14) durch das lokalisierte Schmelzen entsprechender Abschnitte des Zahnriemens (13), sowie das Auflösen und Trennen des thermoplastischen Materials einer Reihe von Verbindungselementen (16) und demzufolge das Bilden mehrerer Gruppen, wobei jede Gruppe einen Zahn (4), oder zwei oder mehr Zähne (4) beinhaltet, die durch entsprechende Verbindungselemente (16) miteinander verbunden sind, deren thermoplastisches Material nicht aufgelöst wurde, wobei aneinander angrenzende Gruppen als getrennt voneinander betrachtet werden, da sie nicht durch thermoplastisches Material miteinander verbunden sind.

6. Verfahren nach Anspruch 5, **dadurch gekennzeichnet, dass** die oben genannte Phase des Befestigens des Zahnriemens (13) an dem Band (2) durch lokalisiertes Schmelzen im Einzelnen folgende Vorgänge beinhaltet, die gleichzeitig erfolgen:
- Aktivieren des Bandes (2), um dieses entlang einer ersten Vorschubbahn (W) in Richtung einer Zusammenfügstation (S) zu bewegen;
- Zufuhren des Zahnriemens (13) in die Zusammenfügstation (S) entlang einer zweiten Vorschubbahn mit einer Geschwindigkeit, die gleich einer Geschwindigkeit des Bandes (2) ist, und in einer Vorschubrichtung, die gleich der des Bandes (2) ist;
- Zusammenfügen des Zahnriemens (13) und des Bandes (2) in der Zusammenfügstation (S), so dass sich diese gegenseitig berühren; und
- Ausgeben einer Wärmeströmung (Q) in der Zusammenfügstation (S) und ausgerichtet auf den Bereich (C), in dem die Befestigungsseite (14) des Zahnriemens (13) das Band (2) berührt und/oder kurz davor ist, das Band zu berühren, um so das lokalisierte Schmelzen des Zahnriemens (13) an der Befestigungsseite (14) zu bewirken.

7. Verfahren nach Anspruch 6, **dadurch gekennzeichnet, dass** sich die erste Vorschubbahn in einer geraden und horizontalen Richtung (W) erstreckt.

8. Verfahren nach Anspruch 6 oder 7, **dadurch gekennzeichnet, dass** die zweite Vorschubbahn (R) einen Umfangsbogen in dem Bereich (C) umfasst, in dem die Befestigungsseite (14) des Zahnriemens (13) das Band (2) berührt und/oder kurz davor ist, das Band zu berühren.

9. Verfahren nach Anspruch 5, **dadurch gekennzeichnet, dass** es ferner eine Anfangsphase beinhaltet, die das Abnehmen von Material von dem Zahnriemen (13) auf der Befestigungsseite (14) vorsieht, um die Dicke der Verbindungselemente (16) des Zahnriemens (13) zu regulieren.

10. Band für eine Fördereinrichtung, das mindestens ein Längsführungs-Synchronisierelement aufweist, von dem Typ, der um Antriebsrollen (5, 6) gewunden werden kann, welche Nuten (7, 7h) aufweisen, mit denen das zumindest eine Führungs-Synchronisierelement (40) in Eingriff tritt, worin das Führungs-Synchronisierelement (40) zumindest teilweise aus thermoplastischem Material besteht, **dadurch gekennzeichnet, dass** das Führungs-Synchronisierelement (40) Folgendes beinhaltet: mehrere Gruppen, die aufeinanderfolgend in einer Längsrichtung angeordnet sind, und die an dem Band (2) durch Schmelzen entsprechender Abschnitte aus thermoplastischem Material befestigt sind, wobei jede dieser Gruppen einen Zahn (4) oder zwei oder mehr Zähne (4) beinhaltet, die durch entsprechende Verbindungselemente (16) miteinander verbunden sind, deren thermoplastisches Material während des Schmelzvorganges nicht aufgelöst und getrennt wurde, wobei aneinander angrenzende Gruppen als getrennt voneinander betrachtet werden, da sie nicht durch thermoplastisches Material miteinander verbunden sind.

11. Band nach Anspruch 10, **dadurch gekennzeichnet, dass** das Führungs-Synchronisierelement (40) vollständig aus thermoplastischem Material besteht, so dass jede Gruppe direkt von einer benachbarten Gruppe getrennt wird und durch Schmelzen an dem Band (2) befestigt wird.

12. Band nach Anspruch 10, **dadurch gekennzeichnet, dass** das Führungs-Synchronisierelement (40) aus thermoplastischem Material besteht, in das zumindest eine Verstärkungseinlage (30) eingebettet ist, so dass jede Gruppe mit einer benachbarten Gruppe mittels zumindest einer Verstärkungseinlage (30) verbunden ist und durch Schmelzen an dem Band (2) befestigt wird.

13. Band nach einem der Ansprüche von 10 bis 12, **dadurch gekennzeichnet, dass** die Zähne (4) des Führungs-Synchronisierelements (40) derart geformt sind, dass sie mit einer entsprechenden gezahnten kreisförmigen Nut (7) in Eingriff treten, die in einer Antriebsrolle der Antriebsrollen (5, 6) für Führungs- und Synchronisierzwecke ausgebildet ist.

## Revendications

1. Un appareil pour appliquer au moins un élément de guidage-synchronisation longitudinal sur une courroie destinée à un organe transporteur, la courroie (2) pouvant être enroulée dans son intégralité sur des poulies (5, 6) présentant des rainures (7, 7h) avec lesquelles ledit au moins un élément de guidage-synchronisation (40) vient en prise, **caractérisé en ce qu'**il comprend : des moyens d'entraînement de la courroie (2) le long d'une direction d'avance (W) vers une station d'assemblage (S) ; une source (18) d'émission d'un flux de chaleur (Q) dans une zone (C) de la station d'assemblage (S), qui est activée en relation de phase avec l'activation de la courroie (2) ; une poulie (8), disposée dans la station d'assemblage (S), un axe de ladite poulie (8) est perpendiculaire à la direction d'avance (W) de la courroie (2), et ladite poulie (8) fait face, avec son bord périphérique (9), à la courroie (2) qui passe dans la station d'assemblage (S), la poulie (8) étant mue par des organes actionneurs en relation de phase avec l'activation de la source (18) d'émission d'un flux de chaleur (Q) et avec l'activation de la courroie (2), dans une direction de rotation (R) coïncidant avec une direction de la courroie (2), le long de la direction d'avance (W) et à une vitesse tangentielle qui est égale à la vitesse de la courroie (2), la poulie (8) étant en outre munie d'une denture circulaire (11) qui est destinée à venir en prise avec une courroie dentée (13) alimentée par une station d'alimentation correspondante, fournissant ainsi une action d'entraînement, ladite courroie dentée (13) est composée au moins en partie d'un matériau thermoplastique et comprend une pluralité de dents (4) consécutives jointes entre elles par des éléments de jonction (16) ayant une épaisseur prédéfinie, ce qui définit un côté de fixation (14) opposé à un profil denté (15), la courroie dentée (13) étant entraînée par la poulie (8) et interceptant avec le côté de fixation (14) la courroie (2) à proximité de la zone (C) soumise au flux de chaleur (Q), ce qui détermine en conséquence la fixation de la courroie dentée (13) à la courroie (2) par fusion localisée de portions correspondantes de la courroie dentée (13), puis la désagrégation et la séparation du matériau thermoplastique au niveau d'un nombre d'éléments de jonction (16), définissant en conséquence une pluralité de groupes, chaque groupe comprenant une dent (4), ou deux dents (4) ou plus qui sont jointes entre elles par des éléments de jonction (16) respectifs, dont le matériau thermoplastique ne s'est pas désagrégé, les groupes adjacents étant considérés comme distincts les uns des autres car ils ne sont pas joints entre eux par du matériau thermoplastique.

2. L'appareil selon la revendication 1, **caractérisé en ce qu'**il comprend en outre un dispositif fonctionnellement disposé en amont de la station d'assemblage (S) pour supprimer de la matière de la courroie dentée (13), sur le côté de fixation (14) de celle-ci, de manière à ajuster une épaisseur des éléments de jonction (16) de la courroie dentée (13) pour faire varier le nombre desdits éléments de jonction (16), dont le matériau thermoplastique est destiné à se désagréger et à se séparer.

3. L'appareil selon la revendication 1, dans lequel la courroie dentée (13) est entièrement réalisée dans un matériau thermoplastique, **caractérisé en ce que** chaque groupe est directement disjoint d'un groupe adjacent, étant contraint par fixation uniquement à la courroie (2).

4. L'appareil selon la revendication 1, dans lequel la courroie dentée (13) est réalisée dans un matériau thermoplastique dans lequel est imbriquée au moins une âme de renforcement (30), **caractérisé en ce que** chaque groupe est contraint par fixation à la courroie (2) et est également joint au groupe adjacent par le biais de ladite au moins une âme de renforcement (30).

5. Un procédé pour appliquer au moins un élément de guidage-synchronisation longitudinal sur une courroie destinée à un organe transporteur, la courroie (2) pouvant être enroulée dans son intégralité sur des poulies (5, 6) présentant des rainures (7, 7h) avec lesquelles ledit au moins un élément de guidage-synchronisation (40) vient en prise, ledit procédé exploitant au moins une courroie dentée (13) qui est composée au moins en partie de matériau thermoplastique et comprend une pluralité de dents (4) consécutives jointes par des éléments de jonction (16) ayant une épaisseur prédéfinie, ce qui définit un côté de fixation (14) opposé à un profil denté (15), **caractérisé en ce qu'**il comprend la fixation de la courroie dentée (13) sur la courroie (2), au niveau du côté de fixation (14) respectif, par fusion localisée de portions correspondantes de la courroie dentée (13), puis la désagrégation et la séparation du matériau thermoplastique au niveau d'un nombre d'éléments de jonction (16) et la définition conséquente d'une pluralité de groupes, chaque groupe comprenant une dent (4), ou deux dents (4) ou plus qui sont jointes entre elles par des éléments de jonction (16) respectifs, dont le matériau thermoplastique ne s'est pas désagrégé, les groupes adjacents étant considérés comme distincts les uns des autres car ils ne sont pas joints entre eux par du matériau thermoplastique.

6. Le procédé selon la revendication 5, **caractérisé en ce que** la phase susmentionnée de fixation de la courroie dentée (13) à la courroie (2) par fusion localisée comprend, en particulier, les opérations suivantes qui ont lieu simultanément .
- activation du mouvement de la courroie (2) vers une station d'assemblage (S) le long d'une première trajectoire d'avance (W) ;
- alimentation de la courroie dentée (13) dans la station d'assemblage (S) le long d'une deuxième trajectoire d'avance, à une vitesse qui est égale à une vitesse de la courroie (2) et dans une même direction d'avance que la courroie (2) ;
- union de la courroie dentée (13) et de la courroie (2) dans la station d'assemblage (S) pour établir un contact mutuel ; et
- émission d'un flux de chaleur (Q), dans la station d'assemblage (S), orienté vers la zone (C) où le côté de fixation (14) de la courroie dentée (13) vient en contact, et/ou est sur le point de venir en contact, avec la courroie (2), déterminant ainsi la fusion localisée de la courroie dentée (13) au niveau du côté de fixation (14).

7. Le procédé selon la revendication 6, **caractérisé en ce que** la première trajectoire d'avance se développe dans une direction rectiligne et horizontale (W).

8. Le procédé selon la revendication 6 ou 7, **caractérisé en ce que** la deuxième trajectoire d'avance (R) comprend un arc de cercle dans la zone (C) où le côté de fixation (14) de la courroie dentée (13) entre en contact, et/ou est sur le point d'entrer en contact, avec la courroie (2).

9. Le procédé selon la revendication 5, **caractérisé en ce qu'**il comprend en outre une phase initiale de suppression de matière de la courroie dentée (13), sur le côté de fixation (14), de manière à ajuster l'épaisseur des éléments de jonction (16) de la courroie dentée (13).

10. Une courroie pour un organe transporteur, munie d'au moins un élément de guidage-synchronisation longitudinal, d'un type qui peut être enroulée sur des poulies (5, 6) présentant des rainures (7, 7h) avec lesquelles ledit au moins un élément de guidage-synchronisation longitudinal (40) vient en prise, où ledit élément de guidage-synchronisation (40) est au moins partiellement composé de matériau thermoplastique, **caractérisée en ce que** l'élément de guidage-synchronisation (40) comprend : une pluralité de groupes qui sont disposés les uns derrière les autres dans une direction longitudinale, et qui sont fixés à la courroie (2) par fusion de portions correspondantes de matériau thermoplastique, chacun des groupes comprenant une dent (4) ou deux dents (4) ou plus qui sont jointes entre elles par des éléments de jonction (16) respectifs, dont le matériau thermoplastique ne s'est pas désagrégé et séparé pendant la phase de fusion, les groupes adjacents étant considérés comme distincts les uns des autres car ils ne sont pas joints entre eux par du matériau thermoplastique.

11. La courroie selon la revendication 10, **caractérisée en ce que** l'élément de guidage-synchronisation (40) est entièrement composé de matériau thermoplastique, de sorte que chaque groupe est directement disjoint d'un groupe adjacent et est fixé par fusion à la courroie (2).

12. La courroie selon la revendication 10, **caractérisée en ce que** l'élément de guidage-synchronisation (40) est composé de matériau thermoplastique dans lequel est imbriquée au moins une âme de renforcement (30), de manière à ce que chaque groupe soit joint à un groupe adjacent par ladite au moins une âme de renforcement (30) et fixé par fusion à la courroie (2).

13. La courroie selon l'une quelconque des revendications de 10 à 12, **caractérisée en ce que** les dents (4) de l'élément de guidage-synchronisation (40) sont conformées de manière à venir en prise avec une rainure circulaire dentée (7) correspondante présente dans une poulie des poulies (5, 6) pour des applications de guidage et de synchronisation.
